# EUROPEAN PATENT SPECIFICATION

(11) **EP 1 076 837 B1**
(45) Date of publication and mention of the grant of the patent: **31.07.2002**
(21) Application number: 99920992.7
(22) Date of filing: 07.05.1999
(51) Int. Cl.: G02B 7/34

(54) **METHOD AND APPARATUS FOR FOCUSSING IMAGES**
VERFAHREN UND VORRICHTUNG ZUR SCHARFEINSTELLUNG VON BILDERN
PROCEDE ET APPAREIL DE FOCALISATION D'IMAGES

(30) Priority: 08.05.1998 GB 9809870
(43) Date of publication of application: 21.02.2001
(73) Proprietor: Marcher Enterprises Limited, Hereford HR2 6JR (GB)
(72) Inventor: DAWSON, Timothy, Richard, Holbrook, Hereford HR1 2RL (GB)
(74) Representative: Jackson, Derek Charles
(86) International application number: GB9901435
(87) International publication number: WO9959014

(56) References cited:
- WO-A-93/00601
- US-A- 4 097 881
- US-A- 4 201 456
- PATENT ABSTRACTS OF JAPAN vol. 095, no. 009, 31 October 1995 (1995-10-31) & JP 07 140375 A (NIKON CORP), 2 June 1995 (1995-06-02)
- PATENT ABSTRACTS OF JAPAN vol. 097, no. 006, 30 June 1997 (1997-06-30) & JP 09 043507 A (CANON INC), 14 February 1997 (1997-02-14)
- PATENT ABSTRACTS OF JAPAN vol. 096, no. 008, 30 August 1996 (1996-08-30) & JP 08 094924 A (CANON INC), 12 April 1996 (1996-04-12)

## Description

This invention relates to a method and apparatus for focussing images.

US-A-4 097 881 and Patent Abstracts of Japan, vol. 096, no. 008, each describe an image focussing apparatus comprising two apertures so as to provide simultaneous sub-images and a means for adjusting the apparatus to bring the separate sub-images into a single aligned image.

Nevertheless, it can often be difficult in optical systems to determine accurately whether or not an image is in focus. This is especially the case where the image is being focussed through a relatively small aperture which inherently gives rise to a substantial depth of field.

It is therefore an object of the present invention to provide a method and apparatus for focussing images which permits accurate identification of whether or not an image is in focus.

According to one aspect of the present invention there is provided a method for focussing images, which method comprises the steps of:
providing an optical system including at least first and second apertures, the apertures being provided substantially symmetrically about an optical axis of the system so as to provide at an imaging plane simultaneous separate sub-images formed by the at least first and second apertures, the sub-images being directed to different areas of the imaging plane;
sequentially analysing the separate sub-images in a manner such that the sub-images can be superimposed to form a stable image when the image is in focus; and
adjusting the optical system to generate a stable image formed by the sequential sub-images.

According to a second aspect of the present invention there is provided an apparatus for focussing images, which apparatus comprises an optical system including:
at least first and second apertures, the apertures being positioned substantially symmetrically about an optical axis of the system so as to provide at an imaging plane simultaneous separate sub-images formed by the at least first and second apertures, the sub-images being directed to different areas of the imaging plane;
means for analysing the separate sub-images sequentially in a manner such that the sub-images can be superimposed to form a stable image when the image is in focus; and
means for adjusting the optical system so as to permit focussing of an image.

The separate sub-images may be displayed for manual analysis and/or may be analysed by computer.

The image may be focussed for immediate viewing by a person or may be generated by an imaging means, such as a CCD device, for display.

The sub-images may be displayed at a rate in the range of about five to fifteen or more sub-images per second, preferably either in the range of about five to ten sub-images per second of in the range of about ten to fifteen sub-images per second.

The optical system may be adjusted, for example, by adjusting the position from which the image is viewed.

For a better understanding of the present invention and to show more clearly how it may be carried into effect reference will now be made, by way of example, to the accompanying drawings in which:
Figure 1 is a diagrammatic illustration of an embodiment of an image focussing apparatus, the image being in focus;
Figure 2 is a diagrammatic illustration corresponding to Figure 1, with the image being focussed beyond an imaging means;
Figure 3 is a diagrammatic illustration corresponding to Figure 1, with the image being focussed before an imaging means;
Figure 4 is a diagrammatic illustration of an embodiment of an image focussing apparatus according to the present invention, the image being in focus;
Figure 5 is a diagrammatic illustration corresponding to Figure 4, with the image being focussed beyond an imaging means;
Figure 6 is a diagrammatic illustration corresponding to Figure 4, with the image being focussed before an imaging means;
Figure 7 shows the image focussing apparatus of Figures 4 to 6 incorporating a computer for processing captured images; and
Figure 8 illustrates one manner in which focussing of the image can be adjusted.

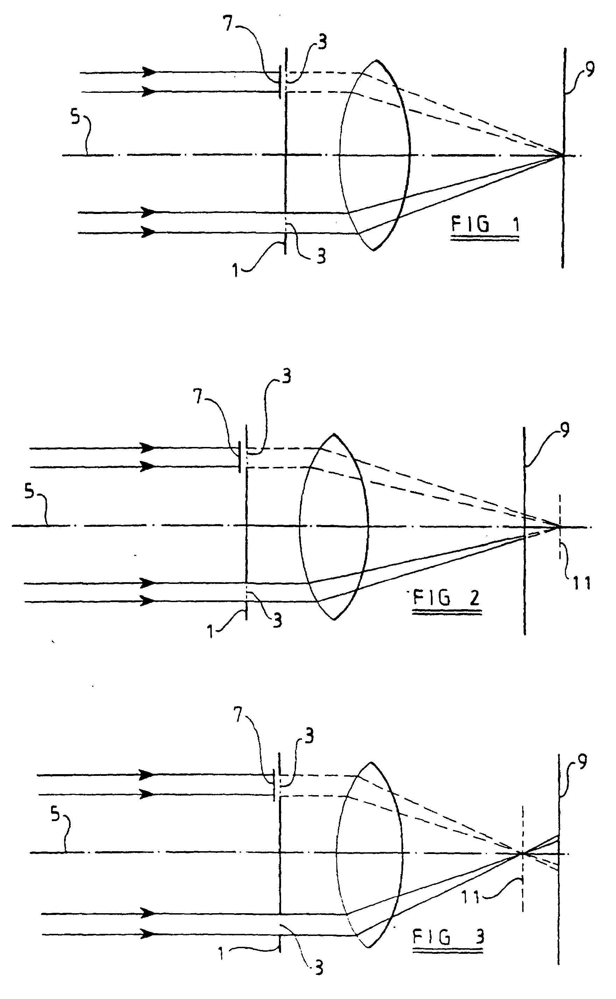

The image focussing apparatus shown in Figures 1, 2 and 3 includes an opaque plate 1 which is provided with two apertures 3 which are positioned symmetrically to either side of an optical axis 5. The plate 1 is provided with shutter means 7 which is adapted to cover one or the other of the apertures 3 alternately. Thus, the visual effect of the shutter and aperture arrangement is that the shutter oscillates between the two apertures.

If desired more than two apertures 3 can be provided positioned substantially symmetrically about the optical axis 5, the shutters 7 being opened and closed in sequence.

In a focussed optical system as illustrated in Figure 1, rays forming an image converge to meet at the focal plane which coincides with an imaging means 9, for example a CCD device employed in a video camera or the like.

When the imaging means 9 does not coincide with the focal plane 11 of the optical system, that is when the imaging means is axially offset relative to the focal plane, the rays no longer meet at the plane of the imaging means and the resulting image is blurred. This can be seen from Figure 2 where the focal plane 11 is beyond the plane of the imaging means 9 and from Figure 3 where the focal plane 11 is before the plane of the imaging means 9.

Where the aperture is small, the depth of field is relatively large and blurring of the image is not readily apparent until the offset between the focal plane 11 and the plane of the imaging means 9 is relatively substantial.

The lack of apparent blurring renders focussing of the image by examination relatively difficult.

Nevertheless, each aperture 3 gives rise to separate sub-images and the sub-images from the two apertures will only coincide at the focal plane 11. When the imaging means 9 is offset from the focal plane, two (slightly blurred) sub-images are formed which are offset laterally relative to each other in the plane of the imaging means 9.

When the shutter means 7 is operated to cover one or other of the apertures 3 alternately, for example the shutter means operating at a rate of about 10 to 15 cycles per second, first one of the laterally offset sub-images is formed and then the other. Thus, an out of focus image oscillates laterally, the image appearing to jump from side to side, with a period corresponding to the cycle time of the shutter means, while a focussed image remains stationary.

It has been found that oscillation of an out of focus image provides a particularly sensitive method of analysing the image for focussing such an image.

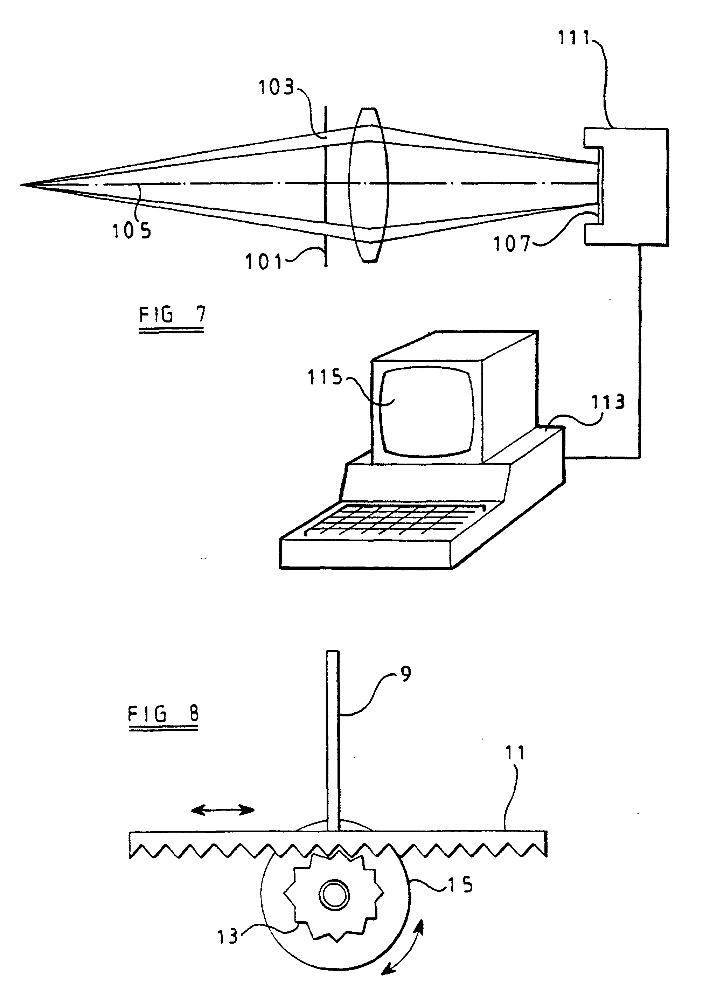

Focussing of the image can be accomplished in any conventional manner, preferably by adjusting the position of the imaging means 9 along the optical axis, that is by adjusting the position from which the image is viewed. This is accomplished, for example as illustrated in Figure 8, by mounting the imaging means on a rack assembly 11, the rack being driven by a pinion 13 on which there is provided an adjusting knob 15 for manual operation and/or which is connected to a stepper motor for computer control. As an alternative (not illustrated), the lens and plate 1 can be moved along the optical axis, with or without the imaging means 9. Nevertheless, it has been found focussing by moving the imaging means 9 alone to be most satisfactory because the change in magnification is least.

The shutter means 7 may comprise any suitable mechanism such as those described in GB-A-2 283 828. That is, the shutter means 7 could comprise one or more mechanical shutters operable to close the apertures 3 in sequence. Alternatively, the shutter means 7 could comprise a pair of polarising filters for each aperture 3 and arranged such that the planes of polarisation are mutually perpendicular. As a further alternative, the shutter means 7 could comprise a liquid crystal shutter arrangement incorporating two liquid crystal shutters controllable to allow light to pass through each shutter in turn.

The shutters need not be provided in a plate of any substantial dimensions, the need being only to provide a means for defining apertures of the required size.

The image focussing apparatus can be used, for example with a wide range of optical instruments and apparatus including ophthalmic apparatus and instruments and microscopes, especially electron microscopes.

The image focussing apparatus described in relation to Figures 1 to 3 is relatively simple to construct and operate. However, it suffers the disadvantage that the two sub-images are analysed or displayed alternately and it is desirable to eliminate the possibility of the image changing, for example as a result of a subject moving, between alternate sub-images.

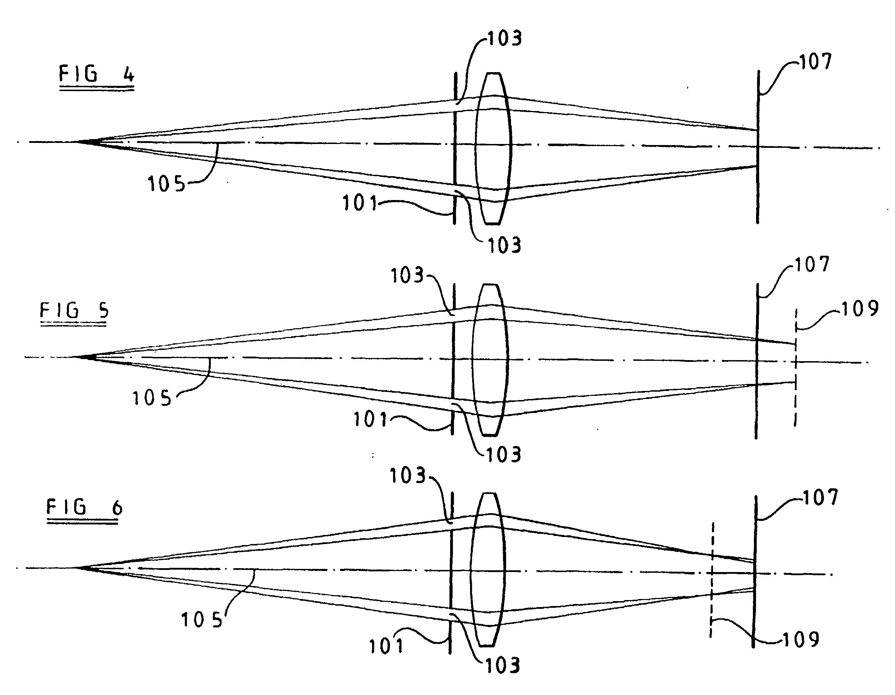

'The image focussing apparatus according to the invention and shown in Figures 4, 5 and 6 enables two sub-images to be analysed or displayed simultaneously. Instead of occupying the same space on the imaging plane as in the embodiment of Figures 1 to 3, the sub-images are optically directed to different areas of the imaging plane thus eliminating the need for a shutter.

The image focussing apparatus shown in Figures 4, 5 and 6 includes an opaque plate 101 which is provided with two apertures 103 which are positioned symmetrically to either side of an optical axis 105.

In a focussed optical system as illustrated in Figure 4, rays forming two sub-images converge to meet at the focal plane which coincides with an imaging means 107, for example a CCD device employed in a video camera or the like. The two sub-images falling on the CCD device can be processed by a computer or the like to display two focussed sub-images in registry with each other.

When the imaging means 107 does not coincide with the focal plane 109 of the optical system, that is when the imaging means is axially offset relative to the focal plane, the rays no longer meet at the plane of the imaging means and the resulting sub-images are blurred. This can be seen from Figure 5 where the focal plane 109 is beyond the plane of the imaging means 107 and the sub-images are further apart at the imaging means 107 than in Figure 4 and from Figure 6 where the focal plane 109 is before the plane of the imaging means 107 and the sub-images are closer together at the imaging means 107 than in Figure 4.

As with the embodiment of Figures 1 to 3, where the aperture is small, the depth of field is relatively large and blurring of the sub-images is not readily apparent until the offset between the focal plane 109 and the plane of the imaging means 107 is relatively substantial.

Nevertheless, each aperture 103 gives rise to separate sub-images and the images from the two apertures will only coincide at the focal plane 109 otherwise they will be laterally offset relative to each other. That is, when the imaging means 107 is offset from the focal plane, two (slightly blurred) sub-images are formed which are offset relative to each other in the plane of the imaging means 107

In this case the two sub-images are gathered simultaneously and can be analysed alternately by computer or displayed alternately on a display such as a computer screen, albeit without the need for a shutter. This has the advantage of eliminating subject movement between the two sub-images.

The overall image is in focus when the two sub-images correspond each other without any lateral movement between the sub-images when they are displayed alternately on a computer screen. As with the embodiment of Figure 1, we have found it is acceptable to alternate the sub-images at a rate of about 5 to 10 (preferably about 6) times per second and an out-of-focus image oscillates laterally, the image appearing to jump from side to side, with a period corresponding to the rate of change of the sub-images, while a focussed image remains stationary. However, it would also be possible to alternate the sub-images at the video frame rate (25 to 30 times per second).

As with the embodiment of Figure 1 to 3, focussing of the image can be accomplished in any conventional manner, such as that shown in Figure 8. Of course, fresh sub-images are gathered as the image is focussed. However, as an alternative in the case where focussing is accomplished by means of a stepper motor as described above in relation to Figure 8, the sub-images can be processed by computer to determine whether or not they are in focus and the focussing can also be controlled by the computer and adjusted until the sub-images correspond each other without any lateral movement therebetween. However, supplemental manual control would enable manual override of the computer if required.

Figure 7 additionally illustrates camera means 111 incorporating the imaging means 107 and a computer 113 for processing captured images and displaying such images alternately on a display 115.

## Claims

1. A method for focussing images, which method comprises the steps of:
providing an optical system including at least first and second apertures (3, 103), the apertures being provided substantially symmetrically about an optical axis (5, 105) of the system so as to provide at an imaging plane simultaneous separate sub-images formed by the at least first and second apertures, the sub-images being directed to different areas of the imaging plane;
sequentially analysing the separate sub-images in a manner such that the sub-images can be superimposed to form a stable image when the image is in focus; and
adjusting the optical system to generate a stable image formed by the sequential sub-images.

2. A method according to claim 1, **characterised in that** the separate sub-images are displayed for manual analysis.

3. A method according to claim 1 or 2, **characterised in that** the separate sub images are analysed by computer.

4. A method according to any preceding claim, **characterised in that** the sub-images are generated at a rate in the range of about five to fifteen sub-images per second.

5. A method according to claim 4, **characterised in that** the sub-images are generated at a rate in the range of about ten to fifteen sub-images per second.

6. A method according to claim 4, **characterised in that** the sub-images are generated at a rate in the range of about five to ten sub-images per second.

7. A method according to any preceding claim, **characterised in that** the optical system is adjusted by adjusting the position from which the image is viewed.

8. An apparatus for focussing images, which apparatus comprises an optical system including:
at least first and second apertures (3, 103), the apertures being positioned substantially symmetrically about an optical axis (5, 105) of the system so as to provide at an imaging plane simultaneous separate sub-images formed by the at least first and second apertures, the sub-images being directed to different areas of the imaging plane;
means for analysing the separate sub-images sequentially in a manner such that the sub-images can be superimposed to form a stable image when the image is in focus; and
means for adjusting the optical system so as to permit focussing of an image.

9. An apparatus as claimed in claim 8, **characterised in that** display means (9), (107) is provided for displaying the separate sub-images for manual analysis.

10. An apparatus as claimed in claim 8 or 9, **characterised in that** a computer (113, 115) is provided for analysing the separate sub-images.

11. An apparatus as claimed in any one of claims 8 to 10, **characterised in that** the sub-images are analysed at a rate in the range of about five to fifteen sub-images per second.

12. An apparatus as claimed in claim 11, **characterised in that** the sub-images are analysed at a rate in the range from about ten to fifteen sub-images per second.

13. An apparatus as claimed in claim 11, **characterised in that** the sub-images are analysed at a rate in the range from about five to ten sub-images per second.

14. An apparatus as claimed in any one of claims 8 to 13, **characterised in that** the optical system is adjusted by adjusting the position from which the image is viewed.

## Patentansprüche

1. Verfahren zum Fokussieren von Bildern, wobei das Verfahren die folgenden Schritte umfasst:
Bereitstellen eines optischen Systems mit wenigstens einer ersten und einer zweiten Apertur (3, 103), wobei die Aperturen im Wesentlichen symmetrisch um eine optische Achse (5, 105) des Systems angeordnet sind, so dass in einer Bilderzeugungsebene gleichzeitige separate Subbilder entstehen, die von der wenigstens ersten und zweiten Apertur gebildet werden, wobei die Subbilder auf verschiedene Bereiche der Bilderzeugungsebene gerichtet sind;
sequentielles Analysieren der separaten Subbilder auf eine solche Weise, dass die Subbilder überlagert werden können, um ein stabiles Bild zu bilden, wenn das Bild scharf ist; und
Einstellen des optischen Systems, um ein stabiles Bild zu erzeugen, das von den sequentiellen Subbildern gebildet wird.

2. Verfahren nach Anspruch 1, **dadurch gekennzeichnet, dass** die separaten Subbilder für eine manuelle Analyse angezeigt werden.

3. Verfahren nach Anspruch 1 oder 2, **dadurch gekennzeichnet, dass** die separaten Subbilder von einem Computer analysiert werden.

4. Verfahren nach einem der vorherigen Ansprüche, **dadurch gekennzeichnet, dass** die Subbilder mit einer Rate im Bereich von etwa fünf bis fünfzehn Subbildern pro Sekunde generiert werden.

5. Verfahren nach Anspruch 4, **dadurch gekennzeichnet, dass** die Subbilder mit einer Rate im Bereich von etwa zehn bis fünfzehn Subbildern pro Sekunde generiert werden.

6. Verfahren nach Anspruch 4, **dadurch gekennzeichnet, dass** die Subbilder mit einer Rate im Bereich von etwa fünf bis zehn Subbildern pro Sekunde generiert werden.

7. Verfahren nach einem der vorherigen Ansprüche, **dadurch gekennzeichnet, dass** das optische System durch Verstellen der Position justiert wird, aus der das Bild betrachtet wird.

8. Vorrichtung zum Fokussieren von Bildern, wobei die Vorrichtung ein optisches System umfasst, das folgendes aufweist:
wenigstens eine erste und eine zweite Apertur (3, 103), wobei die Aperturen im Wesentlichen symmetrisch um eine optische Achse (5, 105) des Systems positioniert sind, um in einer Bilderzeugungsebene gleichzeitige separate Subbilder zu erzeugen, die von der wenigstens ersten und zweiten Apertur gebildet werden, wobei die Subbilder auf verschiedene Bereiche der Bilderzeugungsebene gerichtet sind;
ein Mittel zum Analysieren der separaten Subbilder sequentiell auf eine solche Weise, dass die Subbilder überlagert werden können, um ein stabiles Bild zu bilden, wenn das Bild scharf ist; und
ein Mittel zum Justieren des optischen Systems, um ein Fokussieren eines Bildes zuzulassen.

9. Vorrichtung nach Anspruch 8, **dadurch gekennzeichnet, dass** das Anzeigemittel (9), (107) zum Anzeigen der separaten Subbilder für eine manuelle Analyse vorgesehen ist.

10. Vorrichtung nach Anspruch 8 oder 9, **dadurch gekennzeichnet, dass** ein Computer (113, 115) zum Analysieren der separaten Subbilder vorgesehen ist.

11. Vorrichtung nach einem der Ansprüche 8 bis 10, **dadurch gekennzeichnet, dass** die Subbilder mit einer Rate im Bereich von etwa fünf bis fünfzehn Subbildern pro Sekunde analysiert werden.

12. Vorrichtung nach Anspruch 11, **dadurch gekennzeichnet, dass** die Subbilder mit einer Rate im Bereich von etwa zehn bis fünfzehn Subbildern pro Sekunde analysiert werden.

13. Vorrichtung nach Anspruch 11, **dadurch gekennzeichnet, dass** die Subbilder mit einer Rate im Bereich von etwa fünf bis zehn Subbildern pro Sekunde analysiert werden.

14. Vorrichtung nach einem der Ansprüche 8 bis 13, **dadurch gekennzeichnet, dass** das optische System durch Verstellen der Position justiert wird, aus der das Bild betrachtet wird.

## Revendications

1. Un procédé de mise au point d'images, ledit procédé comprenant les étapes suivantes :
prévision d'un système optique comportant au moins une première et une deuxième ouvertures (3, 103), les ouvertures étant prévues de façon sensiblement symétrique autour d'un axe optique (5, 105) du système de sorte à produire, dans un plan d'imagerie, des sous-images séparées simultanées formées par au moins la première et la deuxième ouvertures, les sous-images étant dirigées vers des zones différentes du plan d'imagerie ;
analyse séquentielle des sous-images séparées de sorte que les sous-images peuvent être superposées pour former une image stable lorsque l'image est au point ; et
ajustement du système optique pour produire une image stable formée par les sous-images séquentielles.

2. Un procédé selon la revendication 1, **caractérisé en ce que** les sous-images séparées sont affichées pour une analyse manuelle.

3. Un procédé selon la revendication 1 ou 2, **caractérisé en ce que** les sous-images séparées sont analysées par un ordinateur.

4. Un procédé selon l'une quelconque des revendications précédentes, **caractérisé en ce que** les sous-images sont produites à une cadence comprise dans la plage d'environ cinq à quinze sous-images par seconde.

5. Un procédé selon la revendication 4, **caractérisé en ce que** les sous-images sont produites à une cadence comprise dans la plage d'environ dix à quinze sous-images par seconde.

6. Un procédé selon la revendication 4, **caractérisé en ce que** les sous-images sont produites à une cadence comprise dans la plage d'environ cinq à dix sous-images par seconde.

7. Un procédé selon l'une quelconque des revendications précédentes, **caractérisé en ce que** le système optique est ajusté en ajustant la position à partir de laquelle l'image est visionnée.

8. Un appareil de mise au point d'images, ledit appareil comprenant un système optique comportant :
au moins une première et une deuxième ouvertures (3, 103), les ouvertures étant placées de façon sensiblement symétrique autour d'un axe optique (5, 105) du système de sorte à produire, dans un plan d'imagerie, des sous-images séparées simultanées formées par au moins la première et la deuxième ouvertures, les sous-images étant dirigées vers des zones différentes du plan d'imagerie ;
des moyens d'analyse séquentielle des sous-images séparées de sorte que les sous-images peuvent être superposées pour former une image stable lorsque l'image est au point ; et
des moyens d'ajustement du système optique pour rendre possible la mise au point d'une image.

9. Un appareil selon la revendication 8, **caractérisé en ce que** le moyen d'affichage (9), (107) est prévu pour afficher les sous-images séparées pour une analyse manuelle.

10. Un appareil selon la revendication 8 ou 9, **caractérisé en ce qu'**un ordinateur (113, 115) est prévu pour analyser les sous-images séparées.

11. Un appareil selon l'une quelconque des revendications 8 à 10, **caractérisé en ce que** les sous-images sont analysées à une cadence comprise dans la plage d'environ cinq à quinze sous-images par seconde.

12. Un appareil selon la revendication 11, **caractérisé en ce que** les sous-images sont analysées à une cadence comprise dans la plage d'environ dix à quinze sous-images par seconde.

13. Un appareil selon la revendication 11, **caractérisé en ce que** les sous-images sont analysées à une cadence comprise dans la plage d'environ cinq à dix sous-images par seconde.

14. Un appareil selon l'une quelconque des revendications 8 à 13, **caractérisé en ce que** le système optique est ajusté en ajustant la position à partir de laquelle l'image est visionnée.
